## Europäisches Patentamt
## European Patent Office
## Office européen des brevets

(11) Veröffentlichungsnummer: **0 049 330**
**B1**

(12) # EUROPÄISCHE PATENTSCHRIFT

(45) Veröffentlichungstag der Patentschrift:
**29.01.86**

(51) Int. Cl.⁴: **A 01 C 7/00,** A 01 B **49/04,**
A 01 D 43/12

(21) Anmeldenummer: **81105249.7**

(22) Anmeldetag: **07.07.81**

(54) Verfahren zum Ausbringen von Saatgut, Herrichten eines Saatbettes und Gerätekombination zur Verfahrensdurchführung.

(30) Priorität: **26.07.80 DE 3028382**

(43) Veröffentlichungstag der Anmeldung:
**14.04.82 Patentblatt 82/15**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**EP - A - 0 015 800**
**EP - A - 0 027 924**
**DE - A - 2 506 223**
**DE - B - 2 425 408**
**DE - C - 401 879**
**US - A - 2 286 143**
**US - A - 2 364 667**
**US - A - 3 880 099**

(73) Patentinhaber: **Weichel, Ernst, Bahnhofstrasse 1,
D-7326 Heiningen (DE)**

(72) Erfinder: **Weichel, Ernst, Bahnhofstrasse 1,
D-7326 Heiningen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf zwei alternative, jedoch dem gleichen anwendungstechnischen Grundgedanken unterliegende Verfahren nach den beiden tragenden Hauptansprüchen sowie auf eine Vorrichtung bzw. Gerätekombination zur Durchführung der einzelnen Verfahrensschritte in ein und demselben Arbeitsgang.

Durch die DE-C-401 879 ist bereits eine Gerätekombination zur Bodenlockerung, Saatbettherrichtung und Bestellung in einem Arbeitsgang bekannt geworden, bei welcher der Boden als erstes durch rotierende Werkzeuge zerkleinert, anschliessend über Kopf gegen ein Sieb geschleudert und durch eine nachfolgende Krümel- oder Packerwalze wieder oberflächlich verdichtet wird. Eine angeschlossene Drillmaschine, die den rotierenden Werkzeugen nachgeordnet ist, bringt zudem gleichzeitig Saatkörner im selben Arbeitsgang in den gekrümelten Boden ein.

Diese Art von Gerätekombinationen leisten aber allenfalls auf leichten Böden oder solchen, die nicht mit zu grossen Mengen lebender oder abgestorbener Pflanzen, Dünger, Mais- und Getreidestroh usw. bedeckt sind, zufriedenstellende Arbeit. Auf schwereren Böden, die zudem noch mit grösseren Mengen Gründüngung oder Stroh bedeckt sind, haben sie aber den Nachteil, dass sie oft eine zu grobschollige Bodenstruktur hinterlassen, in der die ausgebrachten Saatkörner sehr leicht zu tief in den Boden gelangen, oder ohne innigen Kontakt mit feinen Bodenkrümeln in Hohlräumen vertrocknen, so dass die Saaten oft ungleichmässig, zu dünn oder überhaupt nicht auflaufen. Insbesondere das im aufgeworfenen Erdstrom liegende Sieb verstopft sehr schnell und verhindert so, dass Feinerde auf die zuvor abgelegte Saat gelangen kann, bevor diese von der nachfolgenden Walze angedrückt wird. Die vorliegende Erfindung hat es sich daher zur Aufgabe gemacht, ein Verfahren und eine Gerätekombination zur Feldbestellung gemäss dem Oberbegriff der Patentansprüche 1 und 2 zu schaffen, die die Nachteile der bekannten Gerätekombinationen vermeidet. Insbesondere soll sie auch mit grossen Mengen Pflanzen bestandene Ackerböden in einem Arbeitsgang saatfertig herrichten, das Saatgut ausbringen und dieses mit einem Gemisch aus Feinerde und den vorher die Oberfläche des Feldes bedeckenden Pflanzen bzw. Ernterückständen gleichmässig und so bedecken, dass die keimenden und heranwachsenden Pflanzen z.B. Getreide, Mais, durch diese Mulchschicht hindurchwachsen können.

Gelöst wird diese Aufgabe dabei verfahrens- sowie vorrichtungsmässig im wesentlichen durch die in den Patentansprüchen 1 und 2 angegebenen Verfahrensmassnahmen sowie durch die in Anspruch 6 angegebenen baulichen sowie anordnungstechnischen Mittel. Besondere Ausführungsformen sind in den abhängigen Ansprüchen angegeben.

In den Zeichnungen sind weitestgehend schematisch verschiedene Varianten von Gerätekombinationen zur Verfahrensdurchführung dargestellt und anhand dieser Zeichnungen anschliessend näher beschrieben. Es zeigen:

Fig. 1 eine Gerätekombination in teilweise geschnittener Seitenansicht,

Fig. 2 eine Rückansicht zu Fig. 1,

Fig. 3 bis 7 verschiedene Alternativlösungen zur Darstellung in Fig. 1,

Fig. 8 eine weitere Variante der Anordnung des Säorgans, und

Fig. 9 die gleiche bauliche Ausführung in entgegengesetzter Drehrichtung.

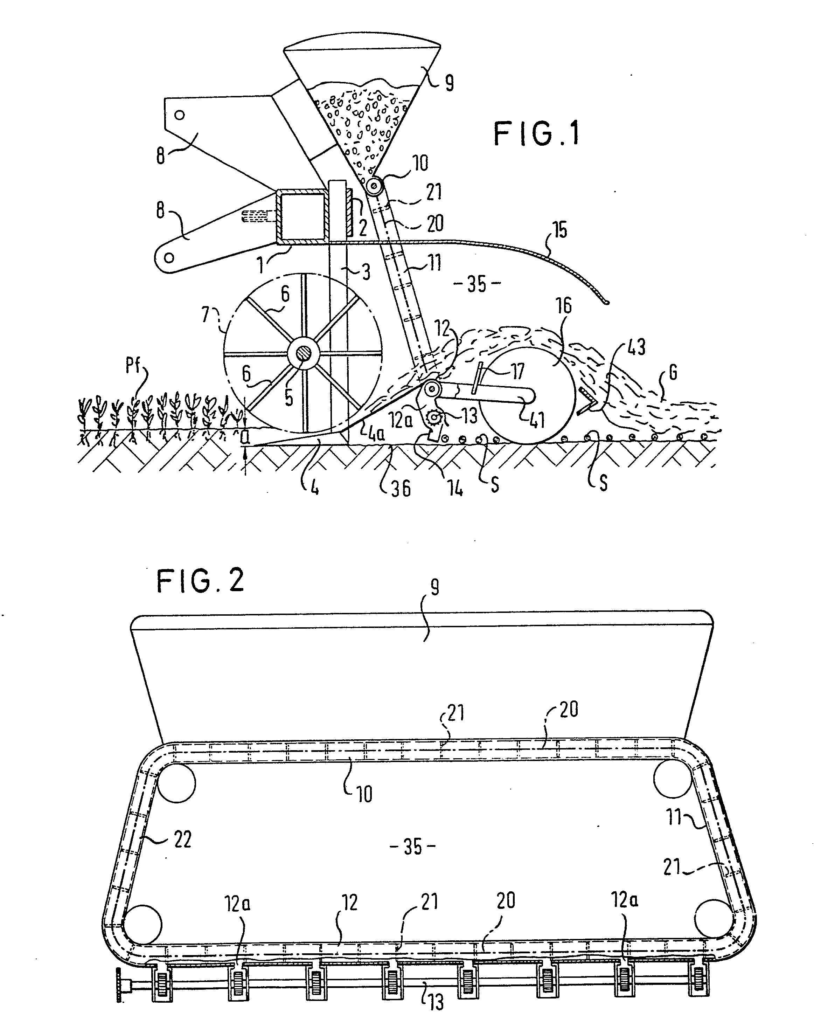

Wie Fig. 1 und 2 zeigen, besteht die erfindungsgemässe Gerätekombination aus einem Tragrohr 1, an dem eine Haltevorrichtung 2 für einen Haltestiel 3 angeordnet ist, an dessen unterem Ende sich ein Lockerungsschar 4 befindet und der zwischen den Bewegungsbahnen von rotierenden Zinken 6, die auf einer rotierenden Welle 5 sitzen und Bewegungsbahnen 7 beschreiben, angeordnet ist.

Am Tragrohr 1 ist ausserdem auch noch die Anbauvorrichtung 8 für die Unter- und Oberlenker eines nicht näher dargestellten Traktors und ein Saatgutbehälter 9 befestigt, in dessen Boden ein Querförderer 10 angeordnet ist, der einen seitlichen Zuführungsstrang 11 aufweist, der von oben nach unten verläuft und mit einem weiteren Querförderer 12 verbunden ist, dessen Förderrichtung der Förderrichtung des Querförderers 10 entgegengesetzt verläuft, und der oberhalb oder neben einem kleinen Vorratsraum 12a angeordnet ist. Der Querförderer 12 und der Vorratsraum 12a stehen mit dem Säorgan 13, das Säschare 14 aufweisen kann, in räumlicher Verbindung und bilden die untere Begrenzung einer seitlich von dem Zulaufförderer 11 und dem Rückförderer 22 begrenzten Durchtrittsöffnung 35, durch welche das von den Scharen 4 abgelöste Erdreich zusammen mit eventuell darauf stehenden Pflanzen über eine vor der Oberkante des Querförderers 12 endenden Leitbahn 4a nach hinten ausgeworfen wird. Das ausgeworfene Erd-Pflanzengemisch «G» wird von einer Abdeckhaube 15 aufgefangen, so dass es hinter einer Druckrolle 16 auf den von seiner obersten Bodenschicht «A» befreiten, selbst unverändert gebliebenen Horizont 36 abgelegte Saatgut «S» ausgeworfen wird.

Die Zinken 6 nehmen die von den Lockerungsscharen 4 unterfahrene Bodenschicht samt den darauf stehenden Pflanzen oder dem darauf liegenden Stroh o.ä. auf und schleudern es über die Rutschbahn 4a in Richtung schräg von unten nach oben nach hinten, so dass mindestens ein Teil des hochgeworfenen Gemisches aus Erde und Pflanzenresten über die Druckwalze 16 hinweg auf den Erdboden fällt. Falls es erwünscht ist, das Saatgut nicht direkt auf den unbearbeiteten Bodenhorizont 36, sondern in lose und fein gekrümelte Erde einzulegen, kann durch richtige Einstellung eines Prallbleches 17 erreicht werden, dass das hochgeworfene Erd-Pflanzengemisch «G» so geteilt wird, dass ein Teil des Gemisches vor der Sävorrichtung 13, 14 auf den Boden fällt. Das in diese lose Erdschicht abgelegte Saatgut kann daher anschliessend direkt von der Druckwalze 16 in die lockere Erde eingedrückt werden und wird von dem durch die Abdeckhaube 15 abgelenkten Rest des Erde-Pflanzengemisches zugedeckt.

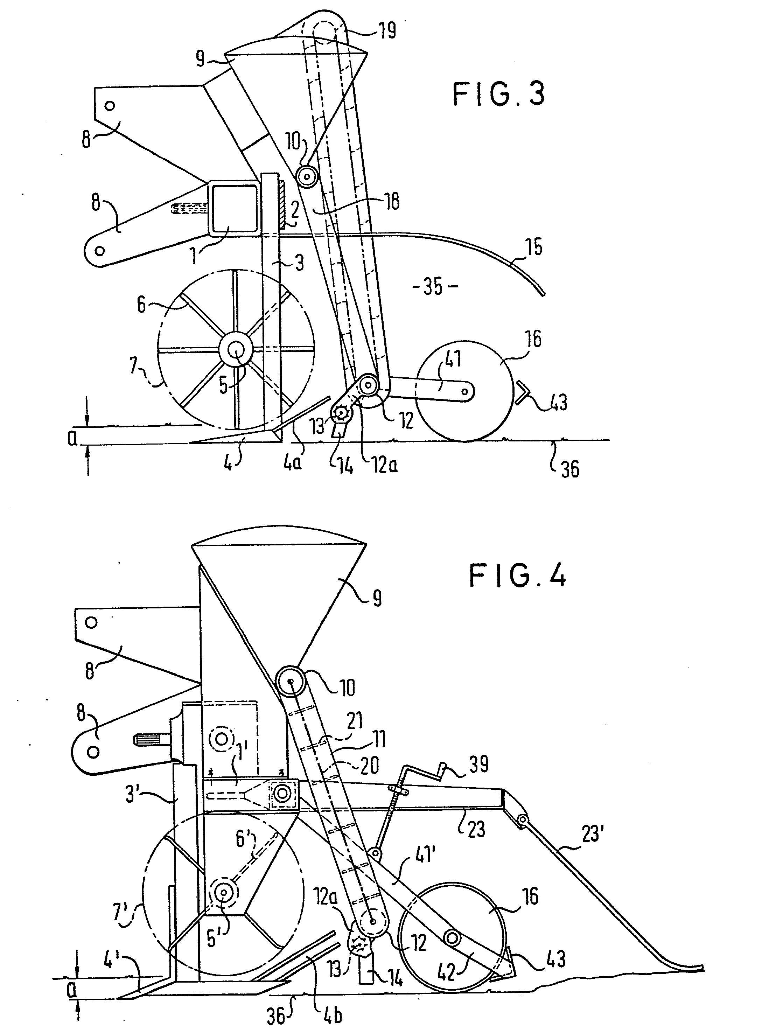

Es ist aber auch möglich, das hochgeworfene Erd-Pflanzengemisch in drei Teile zu zerlegen, von denen der erste Teil als lockerer Boden vor der Sävorrichtung auf den unbearbeitet bleibenden Horizont 36 abgelegt wird. Dies lässt sich beispielsweise dadurch erreichen, dass, wie in Fig. 4 angedeutet ist, die Leitbahn 4a aus stabförmigen Elementen 4b gebildet wird.

Der zweite Teil wird durch das Prallblech 17 auf das von der Sävorrichtung abgelegte Saatkorn abgelenkt, so dass diese lose Erde zusammen mit dem Saatkorn angedrückt wird. Der dritte Teil wird gegen die Abdeckhaube 15 geworfen, so dass es das in die lose Erde eingedrückte Saatgut mit zusätzlicher Pflanzenmasse und Erde bedecken kann.

Der in Fig. 1 und 2 dargestellte Querförderer 10 für das Saatgut ist als an sich bekannter Rohrkettenförderer ausgebildet, in dem nicht dargestellte Umlenkrollen angeordnet sind, von denen die eine in ebenfalls bekannter Weise angetrieben ist und eine Förderkette oder ein Seil 20 mit Mitnehmerscheiben 21 durch das Rohr zieht, so dass es im Boden des Saatgutbehälters 9 z.B. in Richtung von links nach rechts, anschliessend im senkrechten Zuführstrang 11 nach unten und anschliessend im Querförderer 12 von rechts nach links über die Sävorrichtung 13, 14 hinweggefördert wird. Dadurch gelangen laufend Saatkörner in einen Zwischenbehälter 12a, der somit stets gefüllt bleibt, weil der Rest der Körner ständig weiter in Richtung nach links gefördert wird. Etwa nicht benötigte Körner werden durch den Rückförderstrang 22 in den Saatgutbehälter 9 zurückgefördert. In diesem werden sie vom Querförderer 10 erneut in Umlauf gesetzt.

Wie in Fig. 3 dargestellt ist, kann zum Saatguttransport anstelle des kontinuierlich umlaufenden Rohrkettenförderers, an den Querförderer 10 des Saatgutbehälters 9 beispielsweise auch ein Fallrohr 18 anschliessen und der Körnerüberschuss aus dem unteren Querförderer 12 über einen Elevator 19 wieder in den Saatgutbehälter 9 zurückgeleitet werden.

Darüber hinaus sind sämtliche anderen baulichen Varianten bekannter Fördermittel anwendbar, die sich zu einer Anordnung zusammenfügen lassen, bei der der freie Durchtrittsraum 35 erhalten bleibt.

Die Alternativausführung gemäss Fig. 4 unterscheidet sich im baulichen Detail von den vorher beschriebenen, im wesentlichen durch eine etwas anders gestaltete Rahmenkonstruktion 1', bei der die Stiele 3' für die Lockerungsschare 4' vorn am Rahmen 1' befestigt sind und die Schare 4' vor der Umlaufbahn 7' der vorzugsweise gefederten Zinken 6' des Fräsaggregates 5', 6', 7' in den Boden eingreifen. Anstelle einer einfachen Abdeckhaube 15 ist hierbei eine Art Abdeckrahmen 23, mit anschliessendem Streichblech 23' od.dgl. gewählt worden. Zudem kann über eine Stellspindel 39, die an der Verbindungsstange 41' der Andrückwalze 16 angreift, der Anpressdruck letzterer variiert werden. Dargestellt ist in dieser Figur auch noch die Halterung 42 für den Abstreifer 43 an der Walze 16.

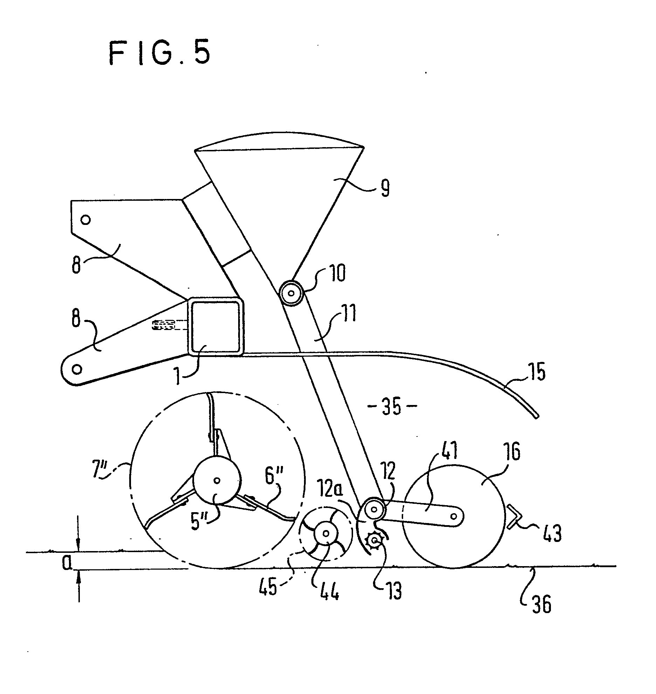

Die Darstellung in Fig. 5 zeigt nun eine Variante bezüglich der Bodenkrümelung. Hierbei wurde auf die Lockerungsschare 4 sowie die Leitelemente 4a bzw. 4b verzichtet und statt dessen lediglich eine Bodenfräse 5'' mit vorzugsweise federnden Zinken 6'' verwendet, deren Umlaufbahn 7'' annähernd die Umlaufbahn 45 einer zinkenbesetzten Krümelwalze 44 tangiert, die als Zwischenförderorgan zudem den freien Raum zwischen Fräse 5'', 6'' und unterer Querförderwelle 12 überbrückt und für einen reibungslosen Transport der abgeschälten Bodenkrume sorgt.

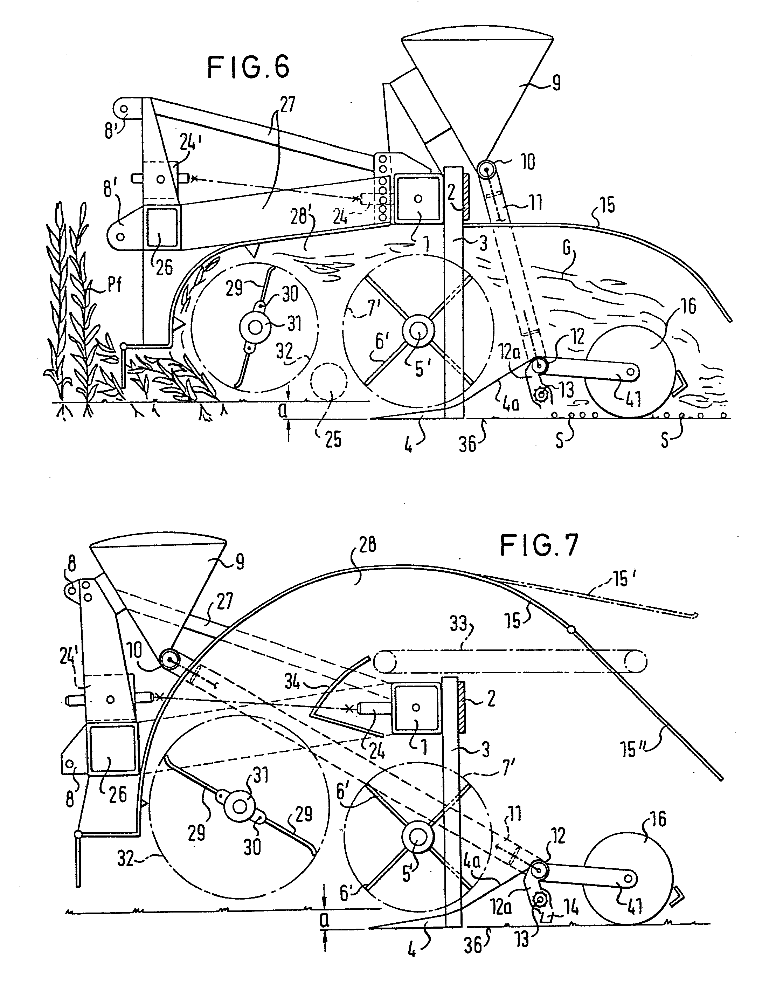

Wie die Fig. 6 und 7 zeigen, kann beim Vorhandensein sehr grosser Pflanzenbestände «Pf», insbesondere Körnermaisstroh, der Gerätekombination nach Fig. 1 ein Schlegelmäher 29 vorgeschaltet werden, der das organische Material über die Sävorrichtung 12, 13, 14 hinweg auf das fertig bestellte Feld auswerfen kann. Das hat den Vorteil, dass die Stärke «A» der von den Lockerungsscharen 4 unterfahrenen Bodenschicht erforderlichenfalls auch grösser gewählt werden kann, und dass das Saatgut ausschliesslich in Feinerde eingebettet wird.

Die organischen Pflanzenmassen werden über die Gesamtvorrichtung hinweg auf das fertig bestellte Saatbett abgelegt, so dass sie, bevor sie verrotten oder den Bodentieren und Bakterien als Nahrung dienen, eine Mulchdecke bilden, die den Boden beschattet und zuerst anwelkt. Um zu verhindern, dass schweres Krümelmaterial sich in einem zu langen Auslaufkanal 28 des Schlegelmähers 29 stauen kann, ist erfindungsgemäss ein an sich bekanntes Förderband 33 vorgesehen, das dieses Material so weit nach hinten fördert, dass es unmittelbar hinter der Druckrolle 16 auf den Erdboden fallen kann. Am vorderen -Ende des Bandes 33 ist eine kurze untere Kanalwand 34 vorgesehen und die Abdeckhaube 15 gemäss der strichpunktierten Lage 15' am Ende etwas hochgezogen oder aber beweglich gestaltet 15''.

Der Förderkanal 28 und die Kanalwand 34 durchdringen die bei diesem Ausführungsbeispiel vergrösserte und schräg von unten nach oben verlaufende Durchtrittsöffnung 35, da der Saatgutbehälter 9 vor und oberhalb des Schlegelmähers 29 und oberhalb des Tragrohres 26 angebracht ist, um einen günstigen Schwerpunkt der Gesamt-Kombination zu erzielen. Tragrohr 26 und Hauptrahmenrohr 1 sind dabei über den Hilfsrahmen 27 untereinander verbunden. Mit den Positionen 24 und 24' sind die Getriebeanschlüsse angedeutet. Falls vom Boden her erforderlich, kann zudem zwischen Mulchgerät 29, 30, 31 und Fräse 5, 6 bzw. 5', 6' noch ein Zwischenförderer, Abstreifer 25 od.dgl. die Bewegungsbahnen 7 und 32 des Zinkenrotors bzw. des Schlegelmähers tangieren bzw. deren Zwischenraum überbrücken.

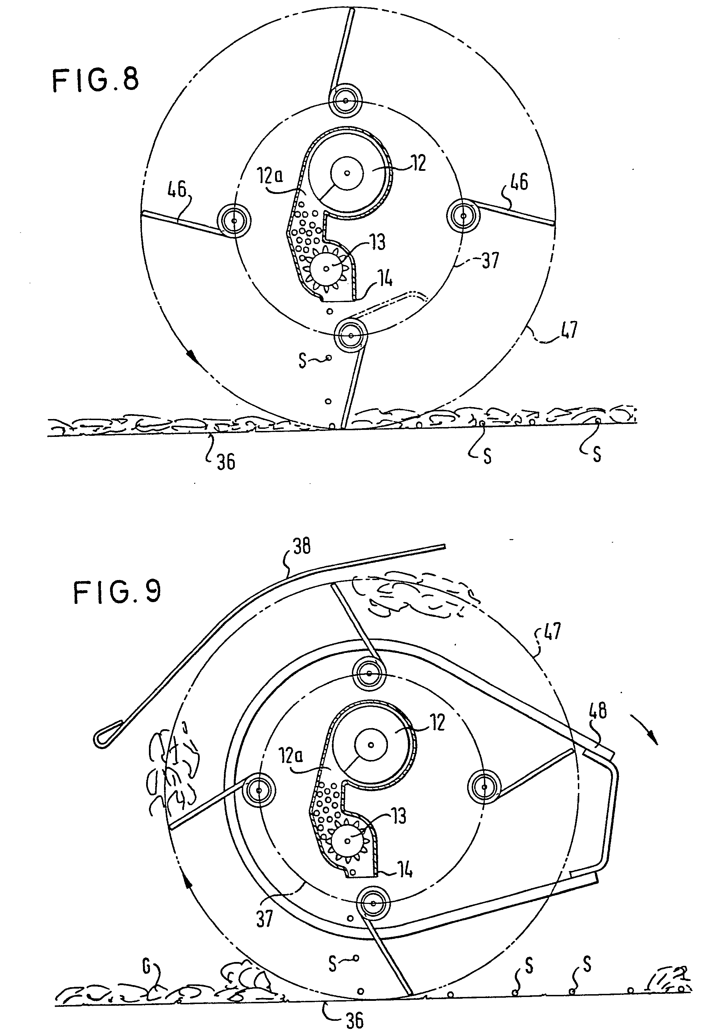

Schliesslich ist in den Fig. 8 und 9 noch angedeutet, dass es auch im Rahmen der technischen Lehre des erfindungsgemässen Verfahrens liegt, mittels einer Aufnehmerwalze 47 mit Lagerung 48 und auf der Bahn 37 gesteuerten und/oder federnden Zinken 46, das Saatbett 36 von Pflanzenresten «G» zum Auslegen der Saatkörner «S» freizuräumen und danach wieder zu bedecken; der untere Saatgutquerförderer 12 mit den Säorganen 13, 14 ist dabei im Inneren der Aufnehmerwalze 37, 47 geführt, der in üblicher Weise ein Leitblech 38 zugeordnet sein kann. Die Drehrichtung für diese Aufnehmerwalze ist dabei in- oder entgegen der Fahrtrichtung.

Da es die vorliegende Erfindung ermöglicht, alle mit Pflanzen bewachsenen oder mit grossen Mengen an Stroh und anderen organischen Abfällen bedeckten Felder in einem einzigen Arbeitsgang zu bestellen, ohne dass die im Hinblick auf die Verrottung von in den Boden eingemischten Ernterückständen bisher als notwendig angesehene sogenannte «Wartezeit» von mehreren Wochen eingehalten werden muss, können in Zukunft fast alle Felder das ganze Jahr über ständig entweder mit Hauptfrüchten oder mit Zwischenfrüchten bedeckt bleiben. Das verbessert die Bodenbeschattung, die Stickstoffanreicherung und die Belebung des Bodens und vermindert den Aufwand für das Unterpflügen von Ernterückständen oder das Grubbern oder Fräsen des Bodens, der bisher erforderlich schien, um die Bodenoberfläche vor der Aussaat der Nachfrucht von Pflanzenrückständen zu befreien.

Das neue Verfahren vermeidet dabei die nachteiligen Wirkungen des bisher üblichen Pflügens, Grubberns oder Fräsens z.B. auf den Bodenschluss, den Wasserhaushalt oder die Störung der Bodenfauna. Es ermöglicht daher eine beachtliche Steigerung der Nettoproduktion an Biomasse in der Landwirtschaft, sowohl zur Nahrungsmittelerzeugung, als auch zur Erzeugung von Energie- und Rohstoffen.

Da das neue Verfahren nicht nur den Arbeitsaufwand und den Verbrauch an Treibstoffen, Handelsdüngern und Pflanzenschutzmitteln verringert, sondern auch entscheidend zur Erhaltung der Bodenfruchtbarkeit, zur Vermeidung der Erosion und Auswaschung beiträgt, sowie die Anreicherung des Humusgehaltes auch in intensiv genutzten Böden ermöglicht, stellt es einen wesentlichen Fortschritt dar.

Wichtig im Gesamtzusammenhang ist, dass generell überall dort, wo die Fräserzinken 6 mit den Lockerungsscharen 4 zusammenarbeiten, die gemäss Fig. 5 angedeuteten und zuvor beschriebenen radial gefederten Zinken 6″ Anwendung finden sollten. Hierdurch ist die Gefahr eines Verklemmens von Steinen zwischen den Scharen 4 und den Zinken 6″ weitestgehend aufgehoben, da letztere ausweichen können und es somit zu keinen Beschädigungen an diesen Teilen mehr kommt.

Das erfindungsgemässe Verfahren kann anstelle der in den Fig. 1 bis 9 beschriebenen Vorrichtungen in nicht näher dargestellter Weise, aber auch mittels bekannter, pneumatischer Sämaschinen durchgeführt werden, die ebenfalls einen zentralen Saatgutbehälter aufweisen. In spezieller baulicher Ausgestaltung müsste dann vorgesehen sein, dass die oberhalb der Fräs- bzw. Förderorgane angeordnete Säeinrichtung aus einem zentralen Saatgutbehälter mit seitlich daraus abzweigenden bzw. seitlich der Geräteabdeckhaube bzw. der Fräsgutdurchtrittsöffnung entlanggeführten Saatgutschläuchen zur pneumatischen Saatgutförderung besteht und die freien Schlauchenden in einer Art Halterung oberhalb des Erdbodens enden und der Schlauchhalterung noch eine in Richtung auf die Geräteabdeckhaube hinweisende Abstreifkante zugeordnet ist.

Die übrigen Bauelemente wie Säschare, Druckrolle, Streichblech usw. sind gleich, wie bei den anderen Ausführungsbeispielen. Die Verwendung einer solchen pneumatischen Sämaschine hat den Vorteil, dass man keinen neuen Saatkasten keine zusätzlichen Quertransportelemente im Saatkasten und keine separaten Säeinrichtungen mit zusätzlichem Querförderer produzieren muss, sondern auf bekannte bzw. bereits vorhandene Bauteile zurückgreifen kann.

Mit einer solchen Maschine kann also ebenfalls sowohl Breitsaat als auch Bandsaat bzw. Drillsaat durchgeführt werden.

**Patentansprüche**

1. Verfahren zum Ausbringen von Saatgut auf mit lebenden Pflanzen und/oder Pflanzenresten bedeckten Böden mit nachfolgendem Abdecken der Saatkörner in ein und demselben maschinellen Arbeitsgang, bei dem die Pflanzen und/oder Pflanzenreste vom Boden aufgenommen und das Saatgut auf dem freigeräumten Boden abgelegt wird, dadurch gekennzeichnet, dass die aufgenommenen Pflanzen und/oder Pflanzenreste über eine Saatgutdosiervorrichtung hinweg und unterhalb eines Saatgutvorratsbehälters hindurch sowie entgegen der Fahrtrichtung einer Zugmaschine gefördert und als Deckschicht auf das auf dem freigeräumten Boden abgelegte Saatgut aufgebracht wird, wobei das Saatgut der Dosiervorrichtung durch zumindest annähernd horizontal und quer zur Fahrtrichtung erfolgendes Fördern zugeführt wird.

2. Verfahren zum Ausbringen von Saatgut auf mit lebenden Pflanzen und/oder mit Pflanzenresten bedeckten Böden mit nachfolgendem Abdekken der Saatkörner in ein und demselben maschinellen Arbeitsgang, bei dem die Pflanzen und/oder Pflanzenreste zusammen mit der obersten Bodenschicht zerkleinert, der zerkleinerte Boden über eine Saatgutdosiervorrichtung hinweg sowie entgegen der Fahrtrichtung einer Zugmaschine gefördert und über das auf dem freigeräumten Bodenhorizont abgelegte Saatgut verteilt wird, dadurch gekennzeichnet, dass die zerkleinerten Pflanzen und/oder Pflanzenreste mit dem zerkleinerten Boden gemischt unterhalb eines Saatgutbehälters hindurch gefördert und zusammen mit dem zerkleinerten Boden über das abgelegte Saatgut verteilt werden, wobei das Saatgut der Dosiervorrichtung annähernd horizontal und quer zur Fahrtrichtung zugeführt wird.

3. Verfahren nach Anspruch 2, dadurch gekennzeichnet, dass ein Teil des Boden-Pflanzen-Gemisches bereits vor der Saatgutablage zur Herrichtung eines Saatbettes auf den Bodenhorizont gebracht wird.

4. Verfahren nach Anspruch 2 oder 3, dadurch gekennzeichnet, dass das abgedeckte Saatgut schliesslich angedrückt wird.

5. Verfahren nach einem der Ansprüche 2 bis 4, dadurch gekennzeichnet, dass stehende Zwischenfrucht unmittelbar vor dem Abheben der obersten Bodenschicht abgeschnitten, zerkleinert und dem Boden-Pflanzen-Gemisch zugeführt wird.

6. Gerätekombination zur Durchführung der Verfahrensschritte nach einem oder mehreren der vorhergehenden Ansprüche, bestehend aus einem sich quer zur Fahrtrichtung erstreckenden Tragrohr (1 bzw. 26) daran angeordneten Werkzeugen (3, 4, 5, 6) zur Lockerung, Krümelung und Förderung der obersten Boden- und/oder Pflanzenschicht (A bzw. Pf) und einem Saatgutbehälter (9) und Säorgane (13, 16) aufweisenden Drillgerät, mit hinter diesen gegebenenfalls angeordneten Druckwalzen bzw. Druckrollen (16), dadurch gekennzeichnet, dass sich über die gesamte Arbeitsbreite gesehen ein freier Raum (35) zwischen dem am bzw. oberhalb des Tragrohres (1 bzw. 26) sitzenden Saatgutbehälter (9) und dem bodenseitigen Säorgan (13, 14) erstreckt.

7. Gerätekombination nach Anspruch 6, dadurch gekennzeichnet, dass die Säorgane (13, 14) an einem Querförderkanal (12) sitzen, der auf einer Seite über eine Saatgutbeschickungsvorrichtung (11) und anderendig über eine Saatgutrückführungsvorrichtung (22) mit dem Saatgutbehälter (9) verbunden ist.

8. Gerätekombination nach den Ansprüchen 6 und 7, dadurch gekennzeichnet, dass an der tiefsten Stelle des Saatgutbehälters (9) sich über die gesamte Breite eine Querförderschnecke (10) od.dgl. erstreckt und die Organe der Saatgutbeschickungsvorrichtung (11) bzw. Saatgutrückführungsvorrichtung (19 bzw. 22) von dieser Querförderschnecke (10) aus, mehr oder weniger aus der Vertikalen heraus und entgegen der Fahrtrichtung, geneigt zum Querförderkanal (12) der Säorgane (13, 14) verlaufen.

9. Gerätekombination nach den Ansprüchen 6 bis 8, dadurch gekennzeichnet, dass zumindest die Saatgutrückführungsvorrichtung aus dem Querförderkanal (12) in den Saatgutbehälter (9) über Fördermittel (19) erfolgt, die Saatgutzuführung gegebenenfalls im freien Fall.

10. Gerätekombination nach den Ansprüchen 6 bis 9, dadurch gekennzeichnet, dass die Saatgutfördermittel zu einem gemeinsamen Ringförderer (10, 11, 12, 22) zusammengefasst sind, an dessen erdbodenseitigen Querteil (12) die Säorgane (13, 14) sitzen.

11. Gerätekombination nach mindestens einem der vorhergehenden Ansprüche, dadurch gekennzeichnet, dass die am Tragrohr (1) sitzenden Bodenlockerungswerkzeuge (6, 6', 6'') und die Werkzeuge (4) zum Abschälen und Krümeln der oberen Bodenschicht (a) unterhalb des Saatgutbehälters (9) und der Abdeckhaube (15) angeordnet sind.

12. Gerätekombination nach einem oder mehreren der vorhergehenden Ansprüche, dadurch gekennzeichnet, dass den Fräs- (6, 4) und Lockerungswerkzeugen ein Mäh-, Mulch- o.ä. Zerkleinerungsgerät (29) zugeordnet bzw. vorgeschaltet und letzteres über einen Ausleger (27) mit dem quer zur Fahrtrichtung liegenden Tragrohr (1) verbunden ist, wobei die Anbauvorrichtung (8') für den Schlepper am freien, vorderen Auslegerende (26) sitzt.

13. Gerätekombination nach einem oder mehreren der vorhergehenden Ansprüche, dadurch gekennzeichnet, dass als Leitelement für das gemähte, gemulchte o.ä. zerkleinerte Halm- bzw. Blattgut (G) ein Kanal (28) und/oder ein zusätzliches Längsförderelement (33) dient.

14. Gerätekombination nach einem oder mehreren der vorhergehenden Ansprüche, dadurch gekennzeichnet, dass die Werkzeuge zur Krümelung der oberen Bodenschicht (a) aus winkelförmigen Fräsmessern (6', 6'') bestehen, die am Erdboden in Fahrtrichtung umlaufen.

15. Gerätekombination nach einem oder mehreren der vorhergehenden Ansprüche, dadurch gekennzeichnet, dass hinter der Umlaufbahn (7, 7₁) der – winkelförmigen – Werkzeuge (6, 6') eine Gleitbahn (4a bzw. 4b) angeordnet ist, die sich vom Erdboden (36) aus, schräg nach hinten ansteigend, bis hin zum Querförderkanal (12) erstreckt.

16. Gerätekombination nach einem oder mehreren der vorhergehenden Ansprüche, dadurch gekennzeichnet, dass die Werkzeuge zur Krümelung der oberen Bodenschicht (8a) aus überwiegend radial stehenden, auf einer angetriebenen Welle (5) angeordneten Zinken (7) bestehen.

17. Gerätekombination nach einem der vorhergehenden Ansprüche, dadurch gekennzeichnet, dass im Bereich hinter der Umlaufbahn (7) der rotierenden Werkzeuge (6) ein verstellbares Leitblech (17) angeordnet ist.

18. Gerätekombination nach einem der vorhergehenden Ansprüche, dadurch gekennzeichnet, dass zwischen Fräswerkzeug (6'') und Querförderkanal (12) ein rotierendes Leitelement (44), eine Krümelwalze od.dgl. vorgesehen ist.

19. Gerätekombination nach einem der vorhergehenden Ansprüche, dadurch gekennzeichnet, dass der Querförderkanal (12) durch eine zinkenbesetzte Aufnehmertrommel (46, 47, 48) axial hindurchgeführt ist.

20. Gerätekombination nach einem der vorhergehenden Ansprüche, dadurch gekennzeichnet, dass die Fräswerkzeuge (6'') als in radialer Richtung federnde bzw. nachgiebige Zinken ausgebildet sind.

21. Gerätekombination nach Anspruch 20, dadurch gekennzeichnet, dass die Zinken (6'') aus flachem bzw. blattförmigem Federstahl bestehen.

22. Gerätekombination nach mindestens einem der vorhergehenden Ansprüche, dadurch gekennzeichnet, dass die oberhalb der Fräs- bzw. Förderorgane angeordnete Säeinrichtung aus einem zentralen Saatgutbehälter mit seitlich daraus abzweigenden bzw. seitlich der Geräteabdeckhaube bzw. der Fräsgutdurchtrittsöffnung entlanggeführten Saatgutschläuchen zur pneumatischen Saatgutförderung besteht und die freien Schlauchenden in einer Art Halterung oberhalb des Erdbodens enden.

23. Gerätekombination nach Anspruch 22, dadurch gekennzeichnet, dass der Schlauchhalterung eine in Richtung auf die Geräteabdeckhaube hinweisende Abstreifkante zugeordnet ist.

**Claims**

1. A process for the sowing of seed on ground having a cover of living plants and/or plant residues with the seeds being subsequently covered in one and the same pass of the machine by the plants and/or plant residues being lifted from the ground and the seeds being sown on the cleared ground, characterized by the plants and/or plant residues being carried away above a seed metering mechanism and below a seed holding container in a direction opposite to the direction of travel of a tractor and being deposited on the seed sown on the cleared ground, whereby the seed is fed to the metering mechanism by conveyors running at least approximately horizontal and crosswise to the direction of travel.

2. A process for the sowing of seed on ground having a cover of living plants and/or plant residues with subsequent covering of the seeds in one and the same pass of the machine, whereby the plants and/or plant residues are comminuted together with the uppermost soil layer, to be carried away above a seed metering mechanism and in a direction opposite to the direction of travel of a tractor and to be deposited on the seeds sown on the cleared soil bed, characterized by the comminuted plants and/or plant residues mixed with the comminuted soil being carried beneath a seed-holding container and being distributed over the sown seed, whereby the seed is fed to the metering mechanism approximately horizontally and crosswise to the direction of travel.

3. A process in accordance with Claim 2, characterized by, a part of the soil-plant mixture being applied to the soil bed in order to prepare a seedbed before the seed is sown.

4. A process in accordance with Claim 2 or 3, characterized by, the sown seed being finally pressed in.

5. A process in accordance with Claims 2 to 4, characterized by, the standing catch crop being cut and chopped immediately before the uppermost soil layer is lifted and by its then being fed to the soil-plant mixture.

6. An implement combination to perform the process steps detailed in one or more of the preceding claims, comprising a seed drill having a support tube (1 or 26) standing crosswise to the direction of travel, bearing tools (3, 4, 5, 6) for loosening, crumbling and conveying the topmost soil and/or plant layer (A or Pf) and a seed holding container (9) and sowing organs (13, 14) with press wheels or press rollers (16) mounted behind it, characterized by, there being a free space (35) between the seed holding container (9) mounted on or above the support tube (1 or 26) and the sowing organs (13, 14) on the ground side.

7. Implement combinations in accordance with Claim 6, characterized by, the sowing organs (13, 14) being mounted on a crosswise conveyor duct (12) that is connected with the seed-holding container (9) at one end by a seed feed mechanism (11) and at the other by a seed return mechanism (22).

8. Implement combinations in accordance with Claims 6 and 7, characterized by, the lowest point of the seed-holding container (9) having a crosswise worm conveyor (10) extending over the full width of the organs of the seed feed mechanism (11) and of the seed return mechanism (19 or 22) being fed from this crosswise worm conveyor (10) at a greater or lesser angle from the vertical and in an opposite direction to the direction of travel to the crosswise conveyor duct (12) of the sowing organs (13, 14).

9. Implement combinations in accordance with Claims 6 to 8, characterized by, at least the seed return mechanism from the cross conveyor duct (12) to the seed holding container (9) being in the form of a conveyor (19) with it being possible for the seed feed to be by free fall.

10. An implement combination in accordance with Claims 6 to 9, characterized by, the means of seed conveyance being in the form of a ring conveyor (10, 11, 12, 22) on whose cross member (22) on the ground side, the sowing organs (13, 14) are mounted.

11. An implement combination in accordance with at least one of the preceding claims, characterized by, the soil loosening tools (6, 6', 6'') and the tools (4) for skimming and crumbling the uppermost soil layer (a) that are all mounted on the support tube (1) being carried beneath the seed holding container (9) and the cover (15).

12. An implement combination in accordance with one or more of the preceding claims, characterized by, the tilling tools (6, 4) and loosening tools being supplemented by or preceded by a mowing, mulching or similar comminuting appliance (27) that is connected with the support tube (1) that runs crosswise to the direction of travel, whereby the mounting equipment (8') for the tractor is located on the free end of the support tube (26).

13. An implement combination in accordance with one or more of the preceding claims, characterized by, a duct (28) and/or an additional lengthwise conveyor element (33) serving as a guide element for the mowed, mulched or otherwise comminuted cereal or foliage material (G).

14. An implement combination in accordance with one or more of the preceding claims, characterized by the tools for crumbling the uppermost soil layer (a) being in the form of angled

6

tilling blades (6', 6'') that rotate in the soil in the direction of travel.

15. An implement combination in accordance with one or more of the preceding claims, characterized by there being behind the line of rotation (7, 7₁) of the angled tilling blades (6, 6') a slideway (4a or 4b) emerging from the soil and rising at a slope to the rear as far as the crosswise conveyor duct (12).

16. An implement combination in accordance with one or more of the preceding claims, characterized by the tools for crumbling the uppermost soil layer (8a) comprising tines (7) that stand essentially radial to a power-driven shaft (5).

17. An implement combination in accordance with one or more of the preceding claims, characterized by an adjustable guide plate (17) being provided behind the line of rotation (7) of the rotating tools (6).

18. An implement combination in accordance with one of the preceding claims, characterized by a rotating guide element (44), a crumbler roller or similar element being located between the tilling tool (6'') and the crosswise conveyor duct (12).

19. An implement combination in accordance with one of the preceding claims, characterized by the crosswise conveyor ducts (12) having a carrier drum mounted with tines (46, 47, 48) passing axially through it.

20. An implement combination in accordance with one of the preceding claims, characterized by the tilling tools (6'') being sprung or free to yield in a radial direction.

21. An implement combination in accordance with Claim 20, characterized by the tines (6'') being of flat or laminated spring steel.

22. An implement combination in accordance with at least one of the preceding claims, characterized by the sowing equipment mounted above the tilling and conveying organs comprising a central seed hopper with seed tubes for the pneumatic conveyance of seed diverging sideways from the hopper and being led to the sides of the cover or of the passage for the comminuted material with the free ends of the tubes being retained in a type of holder above the ground.

23. An implement combination in accordance with Claim 22, characterized by the tube holder having a wiper edge pointing in the direction of the implement cover.

**Revendications**

1. Procédé d'ensemencement sur des sols couverts de plantes vivantes et/ou de résidus de plantes, avec recouvrement consécutif des graines de semence en une seule et même opération mécanique au cours de laquelle on ramasse sur le sol les plantes et/ou les résidus de plantes et on dépose les semences sur le sol libéré, caractérisé par le fait que l'on fait passer les plantes et/ou les résidus de plantes ramassés au-dessus d'un dispositif de dosage des semences et au dessous d'un réservoir des semences, ainsi qu'à l'encontre du sens de la marche d'une machine de traction et qu'on les répend en tant que couche de recouvrement sur les semences déposées sur le sol libéré, les semences étant amenées au dispositif de dosage par un transport s'effectuant au moins à peu près horizontalement et transversalement au sens de la marche.

2. Procédé d'ensemencement sur des sols couverts de plantes vivantes et/ou de résidus de plantes avec recouvrement consécutif des graines de semences en une seule et même opération mécanique au cours de laquelle on broie les plantes et/ou résidus des plantes en même temps que la couche supérieure du sol, on fait passer le sol broyé au-dessus d'un dispositif de dosage des semences ainsi qu'à l'encontre du sens de la marche d'une machine de traction et on le répartit sur les semences déposées sur l'horizon du sol libéré, caractérisé par le fait que l'on fait passer les plantes et/ou les résidus de plantes broyés mélangés avec le sol broyé en dessous d'un réservoir de semences et qu'on les répartit en même temps que le sol broyé sur les semences déposées, les semences étant amenées au dispositif de dosage à peu près horizontalement et transversalement au sens de la marche.

3. Procédé selon la revendication 2, caractérisé par le fait que déjà avant la dépose des semences, on répartit sur l'horizon du sol une partie du mélange sol-plantes en vue de réaliser un lit d'ensemencement.

4. Procédé selon la revendication 2 ou 3, caractérisé par le fait que pour finir, on tasse les semences recouvertes.

5. Procédé selon l'une des revendications 2 à 4, caractérisé par le fait que l'on coupe la culture dérobée existante immédiatement avant le soulèvement de la couche supérieure du sol, qu'on la broie et qu'on l'ajoute au mélange sol-plantes.

6. Combinaison d'appareils pour la mise en œuvre des phases du procédé selon l'une ou plusieurs des revendications précédentes, constituée par un tube-support (1, 26) s'étendant transversalement au sens de la marche, des outils (3, 4, 5, 6) montés dessus pour l'ameublissement, l'émiettage et le transport de la couche supérieure du sol et/ou des plantes (A, Pf) et un appareil pour semis en ligne comportant un réservoir à semences (9) et des organes à semis (13, 16) avec des cylindres ou rouleaux compacteurs (16) éventuellement disposés derrière ceux-ci, caractérisée par le fait que, vu sur toute la largeur de travail, un espace libre (35) s'étend entre le réservoir à semences (9) installé sur ou au-dessus du tube-support (1, 26) et l'organe à semis (13, 14) côté sol.

7. Combinaison d'appareils selon la revendication 6, caractérisée par le fait que les organes à semis (13, 14) sont montés sur un canal de transport transversal (12) qui est raccordé au réservoir à semences (9), d'un côté, par un dispositif d'alimentation en semences (11) et, d'un autre côté, par un dispositif de retour des semences (22).

8. Combinaison d'appareils selon les revendications 6 et 7, caractérisée par le fait qu'à l'endroit le plus bas du réservoir à semences (9), une vis transporteuse transversale (10) ou analogue s'étend sur toute la largeur et que les organes du dispositif d'alimentation en semences (11) et du dispositif de retour des semences (19, 22) s'étendent à partir de cette vis transporteuse (10) vers le canal de transport transversal (12) des organes à semis (13, 14) de façon inclinée plus ou moins par rapport à la verticale et à l'encontre du sens de la marche.

9. Combinaison d'appareils selon les revendications 6 à 8, caractérisée par le fait qu'au moins le retour des semences par le canal transversal (12) dans le réservoir à semences (9) s'effectue par des moyens de transport (19), l'amenée des semences éventuellement en chute libre.

10. Combinaison d'appareils selon les revendications 6 à 9, caractérisée par le fait que les moyens de transport des semences sont réunis en un transporteur annulaire commun (10, 11, 12, 22) sur la partie transversale (12), côté sol, duquel, sont fixés les organes à semis (13, 14).

11. Combinaison d'appareils selon au moins l'une des revendications précédentes, caractérisée par le fait que les outils d'ameublissement du sol (6, 6', 6'') montés sur le tube-support (1) et les outils pour l'écroutage et l'émiettage de la couche supérieure du sol (a) sont disposés en dessous du réservoir à semences (9) et du capot de recouvrement (15).

12. Combinaison d'appareils selon l'une ou plusieurs des revendications précédentes, caractérisée par le fait qu'un appareil de coupe, de hachage ou autre appareil de broyage (29) est associé aux outils de fraisage (6, 4) et d'ameublissement ou monté en amont de ceux-ci et que cet appareil est relié par une console (27) au tube-support (1) placé transversalement au sens de la marche, le dispositif (8) pour le montage sur le tracteur étant situé sur l'extrémité avant libre (26) de la console.

13. Combinaison d'appareils selon l'une ou plusieurs des revendications précédentes, caractérisée par le fait que comme élément de guidage pour les graminacées ou les plantes à feuilles (G) coupées, hachées ou broyées de toute autre façon, on utilise un canal (28) et/ou un élément de transport longitudinal supplémentaire (33).

14. Combinaison d'appareils selon l'une ou plusieurs des revendications précédentes, caractérisée par le fait que les outils pour l'émiettage de la couche supérieure (a) du sol comprennent des lames de fraisage angulaires (6', 6'') qui tournent sur le sol dans le sens de la marche.

15. Combinaison d'appareils selon l'une ou plusieurs des revendications précédentes, caractérisée par le fait que derrière la trajectoire (7, 7₁) des outils (6, 6') angulaires est disposée une piste de glissement (4a, 4b) qui, à partir du sol (36), s'étend en montant obliquement vers l'arrière jusqu'au canal de transport transversal (12).

16. Combinaison d'appareils selon l'une ou plusieurs des revendications précédentes, caractérisée par le fait que les outils pour l'émiettage de la couche supérieure (8a) du sol, sont constitués par des dents (7) principalement radiales disposées sur un arbre entraîné (5).

17. Combinaison d'appareils selon l'une des revendications précédentes, caractérisée par le fait que dans la zone derrière la trajectoire (7) des outils rotatifs (6) est installée une tôle de guidage (17) réglable.

18. Combinaison d'appareils selon l'une des revendications précédentes, caractérisée par le fait qu'entre l'outil de fraisage (6'') et le canal de transport transversal (12) est prévu un élément de guidage rotatif (44), un rouleau d'émiettage ou analogue.

19. Combinaison d'appareils selon l'une des revendications précédentes, caractérisée par le fait que le canal de transport transversal (12) passe axialement à travers un tambour ramasseur (46, 47, 48) garnit de dents.

20. Combinaison d'appareils selon l'une des revendications précédentes, caractérisée par le fait que les outils de fraisage (6'') sont réalisés sous la forme de dents élastiques ou flexibles dans le sens radial.

21. Combinaison d'appareils selon la revendication 20, caractérisée par le fait que les dents (6'') sont réalisées en acier à ressort plat ou en forme de lame.

22. Combinaison d'appareils selon au moins l'une des revendications précédentes, caractérisée par le fait que le dispositif de semis disposé au-dessus des organes de fraisage ou de transport est constitué par un réservoir à semences central avec, pour le transport pneumatique des semences, des flexibles en sortant latéralement et passant latéralement le long du capot de protection des appareils et de l'ouverture de passage du produit de fraisage et que les extrémités libres des flexibles se terminent dans une sorte de fixation au-dessus du sol.

23. Combinaison d'appareils selon la revendication 22, caractérisée par le fait qu'à la fixation des flexibles est associé une arête de râclage tournée dans le sens du capot de protection des appareils.

0 049 330

# FIG.1

# FIG.2

9

FIG. 3

FIG. 4

# F I G . 5

FIG.6

FIG.7

FIG.8

FIG.9